# DEMANDE DE BREVET EUROPEEN

(11) **EP 3 984 698 A1**
(43) Date de publication de la demande: **20.04.2022**
(21) Numéro de dépôt: 20202099.6
(22) Date de dépôt: 15.10.2020
(51) Int. Cl.: B24D 3/06, B22F 7/06

(54) **OUTIL DE COUPE**

(71) Demandeur: ETA SA Manufacture Horlogère Suisse, 2540 Grenchen (CH)
(72) Inventeur: PHAM, Patric, 3427 Utzenstorf (CH); SKRAPITS, Agoston, 2400 Le Locle (CH)
(74) Mandataire: ICB SA

(57) **Abrégé**

La présente invention se rapporte à un outil de coupe destiné à l'usinage d'une pièce, ledit outil comprenant un corps (1) réalisé dans un matériau comprenant en poids entre 90 et 99.5% de W et entre 0.5 et 10% d'un ou plusieurs éléments choisis parmi le Co, Ni, Mo, Cr et le Fe.

## Description

### Domaine de l'invention

L'invention concerne un outil de coupe destiné à l'usinage par meulage d'une pièce et, en particulier, d'un composant horloger en céramique.

### Arrière-plan de l'invention

Le choix du design et du matériau d'un outil de coupe est déterminant pour la durée de vie de l'outil, le temps du cycle d'usinage et la qualité de la pièce usinée.

Des documents EP 0251264 et EP 0731751, on connait des outils de coupe réalisés en carbures de tungstène. Ces outils sont performants grâce à leur haute densité qui réduit les phénomènes vibratoires et grâce à leur rigidité qui prévient le fléchissement de l'outil lors de l'usinage. Ils présentent cependant pour désavantage d'être extrêmement durs, ce qui complique la fabrication de l'outil en tant que tel. En effet, les outils de coupe peuvent comporter des orifices destinés à la circulation du liquide de refroidissement. En particulier, ils peuvent comporter un orifice circulaire qui s'étend le long de l'axe de l'outil et des orifices radiaux débouchant sur la partie active de l'outil de coupe. Il est important que la géométrie de l'outil soit parfaitement axisymétrique et dès lors que l'orifice circulaire soit parfaitement centré pour éviter un phénomène de balourd lors de l'usinage de la pièce. Il peut s'avérer compliqué de garantir ce centrage lorsque le matériau de l'outil de coupe est trop dur.

On connait également des outils en aciers haute résistance. Ces outils présentent des duretés moins élevées que les carbures de tungstène, ce qui en facilite la fabrication. Par contre, leur densité est moindre, ce qui peut engendrer les phénomènes vibratoires susmentionnés.

### Résumé de l'invention

La présente invention a pour objet de palier aux inconvénients précités en proposant un outil de coupe réalisé dans un matériau répondant à tous les critères suivants :
- Très grande rigidité avec un module de Young supérieur ou égal à 300 GPa,
- Facilité d'usinage avec une dureté inférieure ou égale à 450 HV,
- Haute densité avec une densité supérieure à 15 g/cm³.

A cet effet, la présente invention se rapporte à un outil de coupe comprenant un corps réalisé dans un matériau fritté comprenant en poids entre 90 et 99.5% de W sous forme métallique et non de carbures, et entre 0.5 et 10% d'un liant formé d'un ou plusieurs éléments métalliques choisis parmi le Co, Ni, Mo, Cr et le Fe.

L'outil dans ce matériau a une dureté comprise entre 300 et 450 HV, une rigidité comprise entre 300 et 450 GPa et une densité comprise entre 16 et 20 g/cm³.

Selon l'invention, la partie active du corps de l'outil de coupe est revêtue d'un abrasif lié avec un ou plusieurs éléments choisis parmi le Ni, Co et le Mo. Le liant du matériau de l'outil de coupe permet une excellente accroche avec le liant de la couche d'abrasif, ce qui limite le risque de pelage.

D'autres caractéristiques et avantages de la présente invention apparaîtront à la lecture de la description détaillée ci-dessous faisant référence aux figures suivantes.

### Brève description des figures

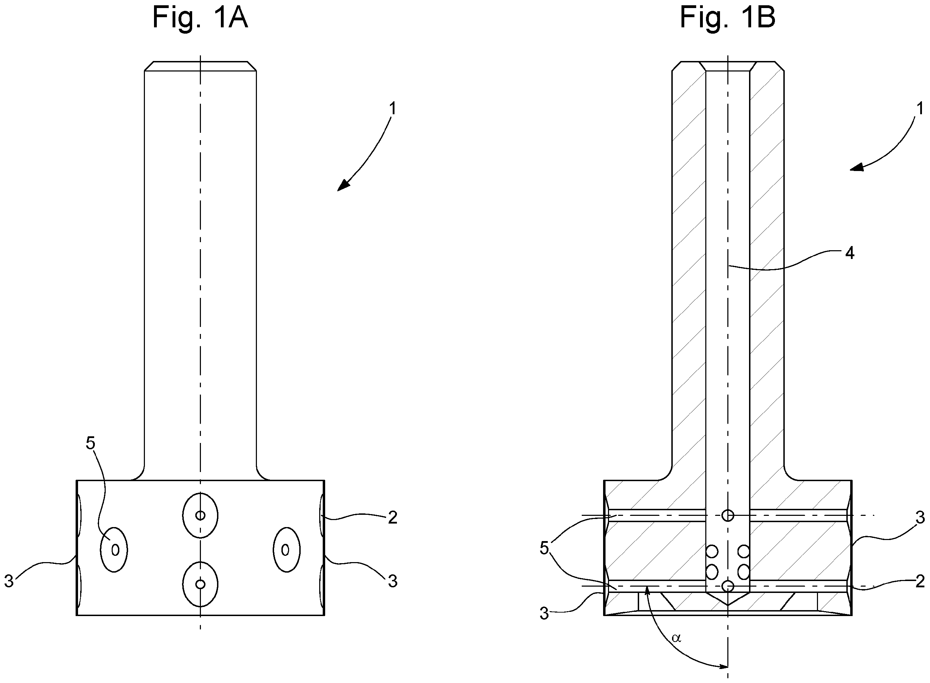

Les figures 1A et 1B représentent respectivement une vue de côté et une vue en coupe de l'outil de coupe selon l'invention.

### Description de l'invention

L'invention concerne un outil de coupe destiné à usiner une pièce. A titre d'exemple, la pièce peut être un composant horloger d'habillage ou du mouvement tel qu'une carrure, un fond, une lunette, une couronne, un poussoir, un maillon de bracelet, un bracelet, une boucle ardillon, un cadran, une aiguille, un index de cadran, une roue dentée, un axe, un pignon, un ressort, un pont, une platine, une vis et un balancier. Bien que non limité à cette application, l'outil de coupe est particulièrement adapté pour l'usinage de pièces en matériau céramique.

L'outil de coupe représenté aux figures 1A et 1B est muni d'un corps 1 qui comporte une partie active 2, aussi appelée tête, destinée à être en contact sur sa surface latérale avec la pièce à usiner. Dans l'exemple illustré, l'outil de coupe comporte un orifice central 4 coaxial avec l'axe longitudinal du corps de coupe et une multitude d'orifices radiaux 5 débouchant au niveau du revêtement 3, aussi appelée couche, de la tête 2 du corps 1. Une rangée d'orifices ayant un angle α compris entre 0 et 90° peut être envisagée de façon à permettre l'arrosage de la face frontale de l'outil.

Selon l'invention, le corps de l'outil de coupe est réalisé dans un matériau comprenant du tungstène et un liant choisi parmi un ou plusieurs des éléments suivants qui sont le Co, Ni, Mo, Cr et le Fe. Le matériau comporte en poids entre 90 et 99.5% de W et entre 0.5 et 10% d'un ou plusieurs éléments choisis parmi le Co, Ni, Mo, Cr et le Fe. De préférence, il comporte en poids entre 93 et 99% de W et entre 1 et 7% d'un ou plusieurs éléments choisis parmi le Co, Ni, Mo, Cr et le Fe. Plus préférentiellement, il comporte entre 95 et 98% de W et entre 2 et 5% d'un ou plusieurs éléments choisis parmi le Co, Ni, Mo, Cr et le Fe.

Le corps a une dureté comprise entre 300 et 450 HV, de préférence entre 300 et 400 HV. Il présente un module de Young compris entre 300 et 450 GPa, de préférence entre 300 et 400 GPa. Il a une densité comprise entre 16 et 20 g/cm³.

La tête 2 du corps 1 est revêtue d'une couche 3 comprenant un abrasif et un liant métallique. L'abrasif peut être une céramique à base d'oxydes, de carbures ou de nitrures, comme par exemple du nitrure de bore cubique, ou un élément comme le diamant. Le liant comporte un ou plusieurs éléments choisis parmi le Ni, Co et le Mo.

Selon l'invention, l'outil de coupe est réalisé par frittage d'un mélange des poudres de tungstène et du liant métallique. Plus précisément, le procédé de fabrication de l'outil de coupe comporte une première étape consistant à réaliser un mélange avec les différentes poudres et ce éventuellement en milieu humide. Les poudres de départ ont préférentiellement un d50 inférieur à 45 µm. Eventuellement, un deuxième mélange comprenant le mélange précité et un système de liant organique (paraffine, polyéthylène, etc.) peut être réalisé. Ensuite, le procédé comporte une étape qui consiste à former une ébauche en conférant au mélange la forme du corps de l'outil désiré, à titre d'exemple, par injection telle que le moulage par injection (*MIM : Metal Injection Moulding*), par pressage ou par impression 3D. Après, l'ébauche est frittée sous pression partielle de gaz, sous vide ou sous pression atmosphérique à une température comprise entre 800 et 1500°C pendant un temps compris entre 10 minutes et 20 heures. Cette étape peut être précédée d'une étape de déliantage dans une gamme de températures comprise entre 60 et 500°C si le mélange comporte un système de liant. Ensuite, le procédé peut comporter une étape de finition de la forme du corps de l'outil, et en particulier de réalisation des orifices du corps, par des moyens conventionnels tels que le perçage, fraisage, meulage, etc. La tête du corps est alors revêtue avec la couche de Ni, Cr et/ou Mo comprenant l'abrasif par galvanoplastie.

Des essais comparatifs ont été réalisés entre un outil de coupe en acier haute résistance tel que le 1.3346, 1.3343 et le 1.3255 et un outil de coupe avec le matériau selon l'invention comprenant du tungstène et du nickel et du fer comme liant.

Les essais ont consisté à usiner une carrure en céramique (ZrO₂) d'une boîte de montre. Les essais ont été réalisés avec un outil de coupe ayant un corps de 6 mm de diamètre et une tête recouverte de la couche abrasive comprenant du diamant et du nickel. L'usinage a été réalisé avec une vitesse de coupe de 660 m/min. La durée de vie de l'outil a été déterminée sur la base du nombre de pièces usinées sans dégradation de la couche abrasive. Avec l'outil de coupe selon l'invention, 24 carrures ont été usinées contre 14 pour l'outil de coupe réalisé dans l'acier haute résistance.

## Revendications

1. Outil de coupe destiné à l'usinage d'une pièce, ledit outil comportant un corps (1) réalisé dans un matériau comprenant en poids entre 90 et 99.5% de W et entre 0.5 et 10% d'un ou plusieurs éléments choisis parmi le Co, Ni, Mo, Cr et le Fe.

2. Outil de coupe selon la revendication 1, **caractérisé en ce que** le matériau comprend en poids entre 93 et 99% de W et entre 1 et 7% d'un ou plusieurs éléments choisis parmi le Co, Ni, Mo, Cr et le Fe.

3. Outil de coupe selon la revendication 1 ou 2, **caractérisé en ce que** le matériau comprend en poids entre 95 et 98% de W et entre 2 et 5% d'un ou plusieurs éléments choisis parmi le Co, Ni, Mo, Cr et le Fe.

4. Outil de coupe selon l'une des revendications précédentes, **caractérisé en ce que** le matériau a une dureté comprise entre 300 et 450 HV.

5. Outil de coupe selon l'une des revendications précédentes, **caractérisé en ce que** le matériau a une dureté comprise entre 300 et 400 HV.

6. Outil de coupe selon l'une des revendications précédentes, **caractérisé en ce que** le matériau a un module de Young compris entre 300 et 450 GPa.

7. Outil de coupe selon l'une des revendications précédentes, **caractérisé en ce que** le matériau a un module de Young compris entre 300 et 400 GPa.

8. Outil de coupe selon l'une des revendications précédentes, **caractérisé en ce que** le corps (1) comporte une tête (2) destinée à être en contact avec la pièce en cours d'usinage, ladite tête (2) comportant sur sa surface extérieure latérale un revêtement (3) comportant un abrasif et un liant.

9. Outil de coupe selon la revendication précédente, **caractérisé en ce que** l'abrasif est choisi parmi les céramiques et le diamant et **en ce que** le liant comporte un ou plusieurs éléments choisis parmi le Ni, Co et le Mo.
